# EUROPÄISCHE PATENTSCHRIFT

(11) **EP 0 633 284 B1**
(45) Veröffentlichungstag und Bekanntmachung des Hinweises auf die Patenterteilung: **06.08.1997**
(21) Anmeldenummer: 94109065.6
(22) Anmeldetag: 14.06.1994
(51) Int. Cl.: C08J 11/08, C08J 3/18, C08L 27/06

(54) **Verfahren zum Recyclisieren von Plastisolen**
Process for recycling plastisols
Procédé pour le recyclage de plastisols

(30) Priorität: 09.07.1993 DE 4322926
(43) Veröffentlichungstag der Anmeldung: 11.01.1995
(73) Patentinhaber: Chemische Werke Kluthe GmbH, 69115 Heidelberg (DE)
(72) Erfinder: Fleischmann, Dieter, Dr., D-69251 Gaiberg (DE); Kluthe, Hans, D-69126 Heidelberg (DE)
(74) Vertreter: Grussdorf, Jürgen, Dr.

(56) Entgegenhaltungen:
- EP-A- 0 510 293
- DE-A- 4 107 684

## Beschreibung

Gegenstand der vorliegenden Erfindung ist ein Verfahren zum Recyclisieren von Plastisolen aus Abfallprodukten, welche bei Herstellung und Beschichtung von Produkten mit Plastisolmaterialien anfallen.

Unter Plastisolen im Sinne der vorliegenden Erfindung werden Dispersionen von Kunststoffpulvern, insbesondere PVC, in Weichmachungsmitteln, welche ggf. noch Stabilisatoren, Pigmente, Füllstoffe oder andere Hilfsstoffe enthalten können, verstanden. Solche Plastisole werden zum Beschichten von Metall, Holz oder Textil in großem Umfang eingesetzt, oder auch direkt zur Herstellung von Kunststoffplatten oder Folien, beispielsweise als Boden- oder Wandbeläge eingesetzt. Als Kunststoffe werden heutzutage überwiegend noch PVC oder PVC-Verschnitte verwendet, jedoch nimmt im Zuge der Bemühungen um den Umweltschutz die Verwendung von chlorfreien anderen Kunststoffen in starkem Maße zu. Soweit daher nichts anderes ausgesagt wird, sind im folgenden unter Plastisolen Dispersionen beliebiger Kunststoffe zu erstehen.

Die Plastisole werden üblicherweise im Spritz- oder Streichverfahren auf die Unterlage aufgebracht, wobei Stellen, welche nicht beschichtete werden sollen, mit Klebefolien oder Schutzdeckeln abgedeckt werden. Diese Schutzmittel mit dem darauf abgelagerten Plastisol werden dann vor dem Gelieren und damit der Ausbildung eines zusammenhängenden Kunststoffilms aus dem Plastisol wieder abgezogen.

Im Zuge der industriellen Serienproduktion fallen solche plastisolverunreinigten Schutzmittel bei einigen Prozessen in größeren Mengen an, so daß ihre Entsorgung Probleme bereitet.

Es ist heute üblich, solche aus Papier oder organischen Kunststoffen bestehenden Schutzmittel zusammen mit dem anhaftenden Plastisol überwiegend zu verbrennen. Soweit Plastisol und/oder Schutzmittel PVC, d. h. chlorbildende Kunststoffe enthalten, ist diese Verbrennung aus Umweltschutzgründen gefährlich. In jedem Fall ist die Verbrennung eine Methode, bei der wertvolle Rohstoffe vergeudet werden.

Aus der DE-A 41 07 684 ist es bekannt, PVC-Plastisole mit einem n-Alkan mit einem Siedebereich von 185 - 214 °C abzulösen. Aus dem Waschrückstand, der 30 % Plastisol und 70 % Lösemittel enthält, wird, nach Aufheizen auf 135-145 °C, zum Gelieren der PVC-Teilchen und Zersetzen der Treibmittel, das Lösemittel im Vakuum abdestilliert. Die Restpaste wird bei 180 - 195 °C auf Scherwalzenextrudern von Lösemittelresten befreit und zu einem Granulat geformt. Dies Granulat ist jedoch für die Herstellung von Plastisole aufgrund der Teilchengröße nicht geeignet.

Aufgabe der vorliegenden Erfindung war es daher ein Verfahren zu finden, bei dem die Plastisolverunreinigungen recyclisiert und zu brauchbaren Plastisolen wieder aufgearbeitet werden können und andererseits die Schutzmittel selbst nach Möglichkeit ebenfalls in einen wiederverwendbaren Zustand gebracht werden. Diese Aufgabe wird durch die im Anspruch 1 wiedergegebenen Merkmale gelöst und durch die Merkmale der Unteransprüche gefördert.

Es erscheint überraschend, daß es möglich ist, Plastisole mittels niedrigsiedender Lösemittel nicht nur wirksam von den Schutzmitteln abzuwaschen und diese damit ggf. wiederverwendbar zu machen, sondern auch, aus der erhaltenen Suspension das Plastisol durch Abdampfen der Lösungsmittel wiederzugewinnen, ohne daß dabei das Plastisol geliert oder teilgeliert und damit unbrauchbar wird.

Entscheidend ist dabei einerseits, daß die Lösungsmittel die Schutzmittel selbst nicht angreifen, was normalerweise unproblematisch ist, da es sich dabei um ausgehärtete Kunststoffe oder vom Löseverhalten inerte Papiere oder Metallfolien handelt, und andererseits auch die Kunststoffpulver aus dem Plastisol sich in dem Lösungsmittel nicht lösen, sondern höchstens anquellen, damit die feinkörnige Konsistenz für die Wiederverwendung im Plastisol erhalten bleibt. Wichtig ist weiterhin, daß die zur Herstellung des Plastisols verwendeten Weichmacher sich in dem Lösungsmittel lösen lassen, damit die durch die Weichmacher verursachte Verklebung der Partikel im Plastisol aufgehoben wird, und die Kunststoffe und Füllstoffe als Pulver von der beschichteten Oberfläche des Schutzmittels abgeschwemmt werden können.

Die Wiederaufbereitung der erhaltenen Plastisolsuspension erfolgt durch Abdampfen der Lösungsmittel bei Temperaturen die erheblich unterhalb der Gelierungstemperatur der Plastisole liegen müssen. Entsprechend niedere Siedepunkte sind auch notwendig, damit der Abstand zum Siedepunkt des Weichmachers genügend groß ist, damit dieser bei der destillativen Entfernung des Lösungsmittels nicht mit abdestilliert wird. Vor allem zur Entfernung der letzten Reste des Lösungsmittels ist es notwendig oder vorteilhaft, zusätzlich ein Vakuum von beispielsweise 5 bis 500 HPa anzulegen, um die Destillation bei Temperaturen zwischen Raumtemperatur und etwa 50 °C durchzuführen.

Als erfindungsgemäß besonders wirksame Lösungsmittel haben sich die als "Petrolether" bekannten niedrigsiedenden Alkane und Alkene mit Siedepunkten zwischen etwa 30 und 80 °C erwiesen. Wegen der einfacheren Handhabung werden Lösungsmittel mit Siedepunkten zwischen etwa 35 und 70 °C bevorzugt. Insbesondere bevorzugt werden als Lösungsmittel die isomeren Hexane (n-Hexan Kp 69 °C, 2-Methylpentan Kp 60 °C, 3-Methylpentan Kp 63 °C, 2,2-Dimethylbutan Kp 50 °C). Das vom Siedepunkt her ebenfalls brauchbare Aceton erweist sich wegen der Lösung oder Aufquellung der Kunststoffteilchen als weniger geeignet, Methanol ist wegen seiner Toxizität nicht bevorzugt, höhere Alkohole wie Ethanol oder Isopropanol sind dagegen destillativ schlecht zu entfernen, so daß sie aus diesem Grunde nicht in Frage kommen. Auch Diethylether und die nächst höheren Homologen kommen vom Siedepunkt her als Lösungsmittel in Frage, quellen jedoch PVC relativ stark an, so daß sie aus diesem Grund nicht bevorzugt sind. Nach dem vorher gesagten ist es für den Fachmann leicht möglich, anhand des Siede- und Löseverhaltens die Eignung anderer, nicht genannter Lösungsmittel zu bestimmen.

Das erfindungsgemäße Verfahren erlaubt es auf sehr einfache Weise Verunreinigungen (Fremdkörper), wie Schmutzpartikel aus dem Herstellungsprozeß, oder Teilagglomerate der verwendeten Kunststoffe abzutrennen, in dem man die relativ niedrigviskosen Suspensionen durch feine Siebe oder Filter preßt, durch die diese Partikel zurückgehalten werden, die Kunststoff- und Füllstoffpartikel des Plastisols jedoch passieren.

Die anschließende Verdampfung der Lösungsmittel erfolgt in geeigneten Verdampfungsapparaturen, beispielsweise Dünnschichtverdampfern, wobei die Mischungen mit zunehmender Verarmung an dem Lösungsmittel zwar viskoser werden, jedoch durch die in der Mischung zurückbleibenden Plastisolweichmacher eine Konsistenz behalten, die ihre weitere Verarbeitung ermöglicht. Je nach Siedepunkt des Lösungsmittels wird von Anfang an oder erst bei fortschreitender Verarmung an Lösemittel und damit Erhöhung des Siedepunktes der Mischung unter einem entsprechenden Vakuum destilliert, so daß die Mischung eine Temperatur von 50 °C, vorzugsweise etwa 30 bis 45 °C nicht überschreitet und eine Koagulation bzw. ein Gelieren der Kunststoffpartikel, welches bei höheren Temperaturen leicht eintreten kann, vermieden wird. Der Restgehalt an Lösungsmittel kann besonders einfach durch Gaschromatographie bestimmt werden. Lösungsmittelrückstände unter 5 %, vorzugsweise unter 1 %, lassen sich erfindungsgemäß leicht einstellen.

Nach der Vakuumdestillation stellt der Destillationsrückstand direkt ein Plastisol dar, welches in seinen Eigenschaften dem Ausgangsplastisol entspricht und sich lediglich noch durch Spuren von restlichen Lösungsmitteln davon unterscheidet. Diese Produkte können der Fabrikation daher direkt wieder zugeführt werden.

### Beispiel

Mit einem nicht gelierten Unterbodenschutzmaterial für Automobile auf PVC-Plastisol-Basis beschichtete Abdeckschablonen aus PVC oder PE werden in eine Trommel gegeben und unter Zusatz von einer gewichtsäquivalenten Menge i-Hexan 10 Minuten bei Raumtemperatur umgewälzt. Danach wird das i-Hexan mit dem darin suspendierten Plastisol abgelassen und die Schablonen noch zweimal mit der halben Menge i-Hexan nachgewaschen. Diese Nachwäsche dient beim nächsten Zyklus als erstes Lösungsmittel.

Die Schablonen werden anschließend aus der Trommel entnommen und nachgetrocknet, und sind direkt wiederverwendbar.

Die erhaltene erste Lösung wird über ein feines Sieb gegeben, um eventuelle Fremdkörper oder agglomerierte Teilchen zurückzuhalten und anschließend in einem Rotationsverdampfer bei einer Heiztemperatur von 30 °C und einem Vakuum von 10 HPa einer Vakuumdestillation unterworfen. Das durch Kühlung auskondensierte i-Hexan wird als Waschflüssigkeit direkt wieder in den Prozeß zurückgeführt.

Nach etwa einer halben Stunde ist die Destillation beendet, d. h. der Destillationsrückstand enthält weniger als ein halbes Prozent i-Hexan. Da Kunststoffe, Weichmacher, Stabilisatoren und Füllstoffe unverändert im Rückstand enthalten sind, kann dieser direkt als Plastisol wieder in die Unterbodenschutzbeschichtungsapparatur zurückgeführt werden.

## Patentansprüche

1. Verfahren zur Recyclisierung von Plastisolen, welche aus Kunststoffpulvern bestehen, die in einem Weichmacher dispergiert und ggf. mit Stabilisatoren, Füllstoffen und anderen Hilfsstoffen versetzt sind, und sich als Abfall eines Beschichtungprozesses auf einem Beschichtungsschutzmittel befinden, **dadurch gekennzeichnet,** daß das Plastisol mit einem zwischen 35 und 80 °C siedenden Lösungsmittel von dem Schutzmittel abgewaschen, von Fremdteilchen und eventuell agglomerierten Kunststoffpartikeln abgetrennt und bei einer Temperatur von unter 50 °C das Lösungsmittel abdestilliert wird.

2. Verfahren gemäß Anspruch 1, **dadurch gekennzeichnet,** daß die Destillation im Vakuum bei 5 bis 500 HPa durchgeführt wird.

3. Verfahren gemäß einem der Ansprüche 1 oder 2, **dadurch gekennzeichnet,** daß als Lösungsmittel ein niederes Alkan oder eine Mischung von Alkanen, mit einem Siedepunkt zwischen 40 und 70 °C, verwendet wird.

4. Verfahren gemäß einem Ansprüche 1 bis 3, **dadurch gekennzeichnet,** daß Fremdkörper und agglomerierte Partikel durch Absieben in einem Sieb mit einer Maschenbreite von < 150 µm abgetrennt werden.

5. Verfahren gemäß einem der Ansprüche 1 bis 4, **dadurch gekennzeichnet,** daß die Schutzmittel durch mehrfaches Waschen gereinigt und in den Produktionsprozeß zurückgeführt werden.

## Claims

1. Process for the recycling of plastisols which consist of synthetic material powders which are dispersed in a plasticiser and are possibly mixed with stabilisers, filling materials and other adjuvants and are present as waste of a coating process on a coating protection agent, characterised in that the plastisol is washed off from the protection agent with a solvent boiling between 35 and 80°C, separated from foreign particles and possibly agglomerated synthetic material particles and the solvent is distilled off at a temperature of below 50°C.

2. Process according to claim 1, characterised in that the distillation is carried out in a vacuum at 5 to 500 HPa.

3. Process according to one of claims 1 or 2, characterised in that, as solvent, there is used a lower alkane or a mixture of alkanes with a boiling point between 40 and 70°C.

4. Process according to one of claims 1 to 3, characterised in that foreign bodies and agglomerated particles are separated off by sieving off in a sieve with a mesh breadth of < 150 µm.

5. Process according to one of claims 1 to 4, characterised in that the protection agents are purified by repeated washing and returned to the production process.

## Revendications

1. Procédé de recyclage de plastisols qui sont constitués de poudres de matière synthétique qui sont dispersées dans un agent plastifiant et sont éventuellement additionnées de stabilisants, de charges et d'autres substances auxiliaires, et qui se trouvent comme déchets d'un processus d'enduction sur un produit de protection vis-à-vis de l'enduction, caractérisé en ce que le plastisol est lavé du produit de protection avec un solvant, qui bout entre 35 et 80°C, et est isolé des particules étrangères et des particules de matière synthétique éventuellement agglomérées, et en ce que le solvant est séparé par distillation à une température inférieure à 50°C.

2. Procédé suivant la revendication 1, caractérisé en ce que la distillation est effectuée sous un vide de 5 à 500 HPa.

3. Procédé suivant l'une des revendications 1 et 2, caractérisé en ce que, comme solvant, on utilise un alcane inférieur ou un mélange d'alcanes ayant un point d'ébullition compris entre 40 et 70°C.

4. Procédé suivant une des revendications 1 à 3, caractérisé en ce que des corps étrangers et des particules agglomérées sont isolés par tamisage dans un tamis ayant une largeur de mailles inférieure à 150 µm.

5. Procédé suivant l'une des revendications 1 à 4, caractérisé en ce que les produits de protection sont nettoyés par un lavage multiple et sont recyclés dans le processus de production.
